# EUROPEAN PATENT APPLICATION

(11) **EP 3 139 332 A1**
(43) Date of publication of application: **08.03.2017**
(21) Application number: 15786547.8
(22) Date of filing: 28.04.2015
(51) Int. Cl.: G06Q 30/02, G06Q 30/06

(54) **OPERATION METHOD AND SYSTEM FOR POINT ENHANCEMENT SERVICE, AND COMPUTER-READABLE RECORDING MEDIUM IN WHICH OPERATION METHOD IS RECORDED**

(30) Priority: 28.04.2014 KR 20140050702
(71) Applicant: Jung, Ki Sung, Gwangju 502-819 (KR)
(72) Inventor: JEONG, Joon Seong, Gwangju 506-798 (KR)
(74) Representative: Mounteney, Simon James
(86) International application number: PCT/KR2015/004209
(87) International publication number: WO 2015/167197

(57) **Abstract**

Provided is a method of providing point enhancement services using a computer system including a server computer connected to at least one user device and an operator device through a network by receiving event request information for applying for a product in return for deduction of points held by a user, from the user device and storing event information generated to correspond to the event request information, receiving event enhancement chance purchase information generated in return for deduction of the points held by the user, from the user device and storing enhancement chance information created to correspond to the event enhancement chance purchase information, receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure, and transmitting event product providing information for providing an event product or discount coupon information, to the user device of a user who has reached a target level or a user who has initially reached a certain level during an event period.

## Description

### TECHNICAL FIELD

The present invention relates to a point enhancement service providing method and system and a computer-readable recording medium having recorded the method thereon and, more particularly, to a point enhancement service providing method and system capable of providing a business model beneficial to all of users, product providers, and an operator based on point enhancement events, and a computer-readable recording medium having recorded the method thereon.

### BACKGROUND ART

In general, issuing points based on activities within a homepage may increase loyalties of users to the homepage, and advertising or promoting the homepage based on a recommend-to-friends button or the like is very useful in marketing.

However, since the points are not generally worth much, a long time is taken to collect the points sufficiently to buy a product or earn a profit, and thus the points are forfeited without being used or exchanged for a product due to inconvenience in many cases.

Conventional events for providing products to users or consumers simply draw winners like a lottery.

However, the events for simply drawing winners do not provide a sense of competition or tactical fun between the users or consumers. In addition, since such events are ended within a short time, the users or consumers may not be immersed or interested in the events and thus the effect of promotion or advertisement may not be great.

Meanwhile, the Internet consists of a huge number of computers and computer networks for globally interconnecting the computers using communication links.

The interconnected computers exchange information using a variety of services, e.g., e-mails, Gopher, and World Wide Web (WWW). The World Wide Web allows a server computer system (e.g., a web server or a website) to transmit graphical webpages of information to a remote client computer system

The remote client computer system may display various webpages received from the server computer.

Due to rapid development of wireless communication networks including a mobile communication network such as a second generation (2G), third generation (3G), fourth generation (4G), or long term evolution (LTE) network, a WIFI communication network, a Bluetooth communication network, a cellular communication network, a code division multiple access (CDMA) communication network, an Ethernet communication network, a WiMAX communication network, a local area network (LAN), a wide area network (WAN), a radio frequency (RF) communication network, an infrared communication network, and an optical communication network, a variety of systems for controlling, operating, and managing vehicles using the wireless communication networks are being developed. However, the vehicle controlling, operating, and managing systems are not connected to smartphones, and thus are inconvenient and may not use various services.

### DETAILED DESCRIPTION OF THE INVENTION

### TECHNICAL PROBLEM

The present invention provides a point enhancement service providing method and system capable of giving chances of tactically or luckily winning event products or discount coupons to users and thus bringing immersive and concentrative fun and interest to the users by enhancing minor points of the users to high levels during a set period of time, of giving opportunities of promotion and advertisement to the product providers by naturally providing information about the event products or product providers to the users, and of providing profits to an operator by receiving various commissions, discount coupons, affiliation charges, advertisement charges, product costs, etc. from the product providers in return for event, promotion, and advertisement services, thereby providing a business model greatly beneficial to all of the users, the product providers, and the operator, and a computer-readable recording medium having recorded the method thereon. However, the scope of the present invention is not limited thereto.

### TECHNICAL SOLUTION

According to an aspect of the present invention, there is provided a method of providing point enhancement services using a computer system including a server computer connected to at least one user device and an operator device through a network by transmitting point information issued to correspond to activities of a user, to the user device, receiving event request information for applying for a product in return for deduction of points held by the user, from the user device and storing event information generated to correspond to the event request information, receiving event enhancement chance purchase information generated in return for deduction of the points held by the user, from the user device and storing enhancement chance information created to correspond to the event enhancement chance purchase information, receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure, and transmitting event product providing information for providing an event product or discount coupon proving information for providing a discount coupon, to the user device of a user who has reached a target level or a user who has initially reached a certain level during an event period.

According to another aspect of the present invention, there is provided a method of providing point enhancement services using a computer system including a server computer connected to at least one user device, at least one product provider device, and an operator device through a network, the server computer including a point issuing program for transmitting point information issued to correspond to activities of a user, to the user device, a product information providing program for receiving event product information about an event product from the product provider device and posting the event product information on the user device during an event period, a point forfeiture program for transmitting point forfeiture information to the user device and storing user-specific event point information corresponding to forfeited points, an event generation program for receiving event request information for applying for the product in return for deduction of user-specific event points held by the user, from the user device and storing event information generated to correspond to the event request information, an enhancement chance purchase program for receiving event enhancement chance purchase information generated in return for deduction of the user-specific event points held by the user, from the user device and storing enhancement chance information created to correspond to the event enhancement chance purchase information, an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure, a product providing program for transmitting event product providing information for providing the event product, to the user device of a user who has reached a target level or a user who has initially reached a certain level during the event period, a point information database for storing the point information, an event product information database for storing the event product information, an event information database for storing the event information, an enhancement success information database for storing the enhancement success information, an enhancement failure information database for storing the enhancement failure information, and an event product providing information database for storing the event product providing information, and the method including (a) transmitting the point information issued to correspond to the activities of the user, to the user device, using the point issuing program, (b) receiving the event product information about the event product from the product provider device and posting the event product information on the user device during the event period, using the product information providing program, (c) transmitting the point forfeiture information to the user device and storing the user-specific event point information corresponding to the forfeited points, using the point forfeiture program, (d) receiving the event request information for applying for the product in return for deduction of the user-specific event points held by the user, from the user device and storing the event information generated to correspond to the event request information, using the event generation program, (e) receiving the event enhancement chance purchase information generated in return for deduction of the user-specific event points held by the user, from the user device and storing the enhancement chance information created to correspond to the event enhancement chance purchase information, using the enhancement chance purchase program, (f) receiving the enhancement chance use information used for the event information, from the user device and storing the enhancement success information for updating the event level if the result of randomly and automatically drawing a lot based on the success rate indicates success, or storing the enhancement failure information for constantly maintaining or downgrading the event level or cancelling the event information if the result indicates failure, using the event enhancement program, and (g) transmitting the event product providing information for providing the event product, to the user device of the user who has reached the target level or the user who has initially reached the certain level during the event period, using the product providing program.

The server computer may further include a game item trading program for receiving game item selling information or game item purchase information from the user device, posting the game item selling information or the game item purchase information on a selling message board or a purchase message board, and mediating trading of a game item, a game item selling information database for storing the game item selling information, and a game item purchase information database for storing the game item purchase information, and the method may further include (I) receiving the game item selling information or the game item purchase information from the user device, posting the game item selling information or the game item purchase information on the selling message board or the purchase message board, and transmitting trading information about trading of the game item to the user device, using the game item trading program, before (a).

The server computer may further include a product payment program for receiving payment request information for requesting to pay for the event product, from the product provider device and processing the payment request information, and a payment request information database for storing the payment request information, and the method may further include (h) receiving the payment request information for requesting to pay for the event product, from the product provider device and processing the payment request information, using the product payment program.

The event product information may include at least one selected among a product name of the event product, a model name of the event product, a price of the event product, the number of the event products, an event name, the event period, an event company, product promotion and advertisement information, review information after purchase and use, online lowest price information, and combinations thereof.

The user-specific event point information may include at least one selected among forfeited point information, applied exchange rate information, generated event point information, saved event point information, sign-up event point information, log-in event point information, recommend-to-friends event point information, game item trading completion event point information, review information, attendance information, advertisement or promotional video viewing information, and combinations thereof.

The event information may include at least one selected among event participant information, event period information, event product information, current event competitor information, current competitive rate information, current event competitor's level information, current event competitor's enhancement chance information, current event competitor's enhancement chance use information, current projected winner information, previous event history information, and combinations thereof.

The enhancement chance information may include at least one selected among current enhancement chance information, general enhancement chance information achievable by deducting a relatively small number of event points but capable of cancelling an event or lowering an event level when enhancement is failed, special enhancement chance information achievable by deducting a relatively large number of event points but capable of maintaining the event or the event level even when enhancement is failed, success rate information increased in inverse proportion to a level, and combinations thereof.

The enhancement success information may include at least one selected among level information to be upgraded, congratulatory information, current rank information, current competitor information, event product information, and combinations thereof, and the enhancement failure information may include at least one selected among level information to be downgraded, event cancellation information, consolatory information, current rank information, current competitor information, event product information, and combinations thereof.

The event product providing information may include at least one selected among target level achievement information, event product acquisition information, acquired event product information, product delivery address information, product delivery date information, product delivery method information, sign-up guide information of a product provider, promotion and advertisement information of the product provider, review information, and combinations thereof.

The server computer may further include a sign-up guide program for transmitting sign-up guide information for guiding to sign up a website of a product provider for delivery of the event product, to the user device of a user who has reached a specific level, and the method may further include (i) transmitting the sign-up guide information for guiding to sign up the website of the product provider for delivery of the event product, to the user device of the user who has reached the specific level, using the sign-up guide program, after (f).

The server computer may further include an event point saving program for saving user-specific event points based on activity information of the user in a homepage or a website of a product provider, and an activity information database for storing the activity information, and the method may further include (j) saving the user-specific event points based on the activity information of the user in the homepage or the website of the product provider, using the event point saving program, before (b).

The activity information may include at least one selected among sign-up information, log-in information, review information, advertisement viewing information, recommend-to-friends information, product details viewing information, product or item trading completion information, advertisement clicking information, event participation information, product providing information, and combinations thereof

The server computer may further include an affiliation program for transmitting affiliation information to the product provider device, and an affiliation information database for storing the affiliation information, and the method may further include (k) transmitting the affiliation information to the product provider device, using the affiliation program, before (b).

The server computer may further include a discount coupon proving program for transmitting discount coupon proving information to the user device to provide a discount coupon usable for the event product or another product corresponding to a current level, and a discount coupon proving information database for storing the discount coupon proving information, and (g) may include transmitting the discount coupon proving information to the user device to provide a level-specific discount coupon usable for the event product or the other product corresponding to the current level of the user upon selection of the user even when the user has not reached the target level.

According to another aspect of the present invention, there is provided a computer system including a server computer connected to at least one user device, at least one product provider device, and an operator device through a network to provide point enhancement services, the server computer including a point issuing program for transmitting point information issued to correspond to activities of a user, to the user device, a product information providing program for receiving event product information about an event product from the product provider device and posting the event product information on the user device during an event period, a point forfeiture program for transmitting point forfeiture information to the user device and storing user-specific event point information corresponding to forfeited points, an event generation program for receiving event request information for applying for the product in return for deduction of user-specific event points held by the user, from the user device and storing event information generated to correspond to the event request information, an enhancement chance purchase program for receiving event enhancement chance purchase information generated in return for deduction of the user-specific event points held by the user, from the user device and storing enhancement chance information created to correspond to the event enhancement chance purchase information, an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure, a product providing program for transmitting event product providing information for providing the event product, to the user device of a user who has reached a target level or a user who has initially reached a certain level during the event period, a point information database for storing the point information, an event product information database for storing the event product information, an event information database for storing the event information, an enhancement success information database for storing the enhancement success information, an enhancement failure information database for storing the enhancement failure information, an event product providing information database for storing the event product providing information, and a controller programmed to transmit the point information issued to correspond to the activities of the user, to the user device, using the point issuing program, to receive the event product information about the event product from the product provider device and post the event product information on the user device during the event period, using the product information providing program, to transmit the point forfeiture information to the user device and store the user-specific event point information corresponding to the forfeited points, using the point forfeiture program, to receive the event request information for applying for the product in return for deduction of the user-specific event points held by the user, from the user device and store the event information generated to correspond to the event request information, using the event generation program, to receive the event enhancement chance purchase information generated in return for deduction of the user-specific event points held by the user, from the user device and store the enhancement chance information created to correspond to the event enhancement chance purchase information, using the enhancement chance purchase program, to receive the enhancement chance use information used for the event information, from the user device and store the enhancement success information for updating the event level if the result of randomly and automatically drawing a lot based on the success rate indicates success, or store the enhancement failure information for constantly maintaining or downgrading the event level or cancelling the event information if the result indicates failure, using the event enhancement program, and to transmit the event product providing information for providing the event product, to the user device of the user who has reached the target level or the user who has initially reached the certain level during the event period, using the product providing program.

According to another aspect of the present invention, there is provided a computer-readable recording medium having recorded thereon a method of providing point enhancement services using a computer system including a server computer connected to at least one user device, at least one product provider device, and an operator device through a network, the server computer including a point issuing program for transmitting point information issued to correspond to activities of a user, to the user device, a product information providing program for receiving event product information about an event product from the product provider device and posting the event product information on the user device during an event period, a point forfeiture program for transmitting point forfeiture information to the user device and storing user-specific event point information corresponding to forfeited points, an event generation program for receiving event request information for applying for the product in return for deduction of user-specific event points held by the user, from the user device and storing event information generated to correspond to the event request information, an enhancement chance purchase program for receiving event enhancement chance purchase information generated in return for deduction of the user-specific event points held by the user, from the user device and storing enhancement chance information created to correspond to the event enhancement chance purchase information, an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure, a product providing program for transmitting event product providing information for providing the event product, to the user device of a user who has reached a target level or a user who has initially reached a certain level during the event period, a point information database for storing the point information, an event product information database for storing the event product information, an event information database for storing the event information, an enhancement success information database for storing the enhancement success information, an enhancement failure information database for storing the enhancement failure information, and an event product providing information database for storing the event product providing information, and the method including (a) transmitting the point information issued to correspond to the activities of the user, to the user device, using the point issuing program, (b) receiving the event product information about the event product from the product provider device and posting the event product information on the user device during the event period, using the product information providing program, (c) transmitting the point forfeiture information to the user device and storing the user-specific event point information corresponding to the forfeited points, using the point forfeiture program, (d) receiving the event request information for applying for the product in return for deduction of the user-specific event points held by the user, from the user device and storing the event information generated to correspond to the event request information, using the event generation program, (e) receiving the event enhancement chance purchase information generated in return for deduction of the user-specific event points held by the user, from the user device and storing the enhancement chance information created to correspond to the event enhancement chance purchase information, using the enhancement chance purchase program, (f) receiving the enhancement chance use information used for the event information, from the user device and storing the enhancement success information for updating the event level if the result of randomly and automatically drawing a lot based on the success rate indicates success, or storing the enhancement failure information for constantly maintaining or downgrading the event level or cancelling the event information if the result indicates failure, using the event enhancement program, and (g) transmitting the event product providing information for providing the event product, to the user device of the user who has reached the target level or the user who has initially reached the certain level during the event period, using the product providing program.

### ADVANTAGEOUS EFFECTS

As described above, according to some embodiments of the present invention, immersive and concentrative fun and interest may be brought to users, opportunities of promotion and advertisement may be given to product providers by naturally providing information about event products or the product providers to the users, and profits may be provided to an operator by receiving various commissions, discount coupons, affiliation charges, advertisement charges, product costs, etc. from the product providers, thereby providing a business model greatly beneficial to all of the users, the product providers, and the operator. However, the scope of the present invention is not limited to the above effect.

### DESCRIPTION OF THE DRAWINGS

FIG. 1 is a conceptual view of a point enhancement service providing system according to some embodiments of the present invention.
FIG. 2 is a conceptual view showing the relationship among an operator for providing point enhancement services, users, and product providers, according to some embodiments of the present invention.
FIG. 3 is a flowchart of a point enhancement service providing method according to some embodiments of the present invention.
FIG. 4 is a flowchart of a point enhancement service providing method according to other embodiments of the present invention.
FIG. 5 is a detailed flowchart of the point enhancement service providing method of FIG. 4.
FIGS. 6 to 16 are diagrams showing screen images displayed in individual operations of FIG. 5.

### BEST MODE

Hereinafter, the present invention will be described in detail by explaining embodiments of the invention with reference to the attached drawings.

The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the thicknesses or sizes of layers are exaggerated for clarity.

It will be understood that when an element, such as a layer, a region, or a substrate, is referred to as being "on," "connected to" or "coupled to" another element, it may be directly on, connected or coupled to the other element or intervening elements may be present. In contrast, when an element is referred to as being "directly on," "directly connected to" or "directly coupled to" another element or layer, there are no intervening elements or layers present. Like reference numerals refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of embodiments.

Spatially relative terms, such as "above," "upper," "beneath," "below," "lower," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "above" may encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of embodiments. As used herein, the singular forms "a," "an" and "the" are intended to include the plural forms as well, unless the context clearly indicates otherwise. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof.

Embodiments of the invention are described herein with reference to schematic illustrations of idealized embodiments (and intermediate structures) of the invention. As such, variations from the shapes of the illustrations as a result, for example, of manufacturing techniques and/or tolerances, are to be expected. Thus, the embodiments of the invention should not be construed as limited to the particular shapes of regions illustrated herein, but are to include deviations in shapes that result, for example, from manufacturing.

A method and system for providing game item trading services, and a computer-readable recording medium having recorded the method thereon, according to some embodiments of the present invention are now described in detail with reference to the attached drawings.

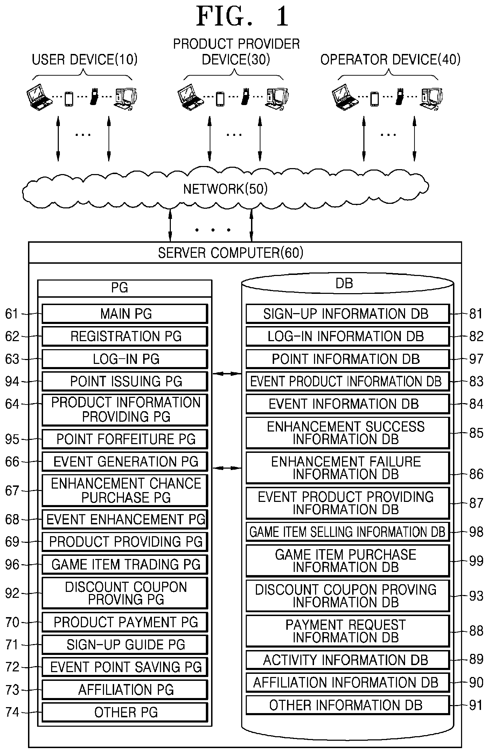

FIG. 1 is a conceptual view of a point enhancement service providing system according to some embodiments of the present invention.

Initially, as illustrated in FIG. 1, the point enhancement service providing system according to some embodiments of the present invention may mainly include a user device 10, a product provider device 30, an operator device 40, and a server computer 60 connected thereto through a network 50.

Herein, the server computer 60 may be programmed
to transmit point information issued to correspond to activities of a user, to the user device 10,
to receive event request information for applying for a product in return for deduction of points held by the user, from the user device 10 and store event information generated to correspond to the event request information,
to receive event enhancement chance purchase information generated in return for deduction of the points held by the user, from the user device 10 and store enhancement chance information created to correspond to the event enhancement chance purchase information,
to receive enhancement chance use information used for the event information, from the user device 10 and store enhancement success information for updating an event level if a result of randomly and automatically drawing a lot based on a success rate indicates success, or store enhancement failure information for constantly maintaining or downgrading the event level or cancelling the event information if the result indicates failure, and
to transmit event product providing information for providing an event product, to the user device 10 of a user who has reached a target level or a user who has initially reached a certain level during an event period, and may be a computer of a company capable of bringing immersive and concentrative fun and interest to users, of giving opportunities of promotion and advertisement to the product providers by naturally providing information about event products or product providers to the users, and of providing point enhancement services by receiving various commissions, affiliation charges, advertisement charges, product costs, etc. from the product providers.

The user device 10 may be a device of an individual, a company, or a franchise who desires to tactically or luckily win the event products by enhancing minor points thereof to a high level during a set period of time.

Herein, the user device 10 is not limited to a computer or a smartphone and may include a variety of mobile devices, personal digital assistants (PDAs), smartphones, smart pads, cameras, camcorders, laptop computers, electronic books, personal computers, server computers, etc. capable of receiving various types of text information, number information, or image information, and of selecting various commands.

The product provider device 30 may be a device of an individual, a company, a group, or a franchise who desires to sell products and to receive opportunities of promotion and advertisement by naturally providing information about the event products or the individual, company, group, or franchise to the users.

Herein, the product provider device 30 may be one of devices of, for example, various electronic commerce companies for distributing and selling product, manufacturers of the products, and various groups, companies, individuals, and franchises for selling the products on consignment, or having the products or information about the products. The product provider device 30 is not limited to a computer or a smartphone and may include a variety of mobile devices, PDAs, smartphones, smart pads, cameras, camcorders, laptop computers, electronic books, personal computers, server computers, etc. capable of receiving various types of text information, number information, or image information, and of selecting various commands.

The operator device 40 is a device of an individual, a company, a group, or a franchise for managing and operating the server computer 60. The operator device 40 is not limited to a computer or a smartphone and may include a variety of mobile devices, PDAs, smartphones, smart pads, cameras, camcorders, laptop computers, electronic books, personal computers, server computers, etc. capable of receiving various types of text information, number information, or image information, and of selecting various commands.

The user device 10, the product provider device 30, the operator device 40, and the server computer 60 of FIG. 1 are interconnected through the network 50, and each of the devices interconnected through the network 50 may have an Internet browser (e.g., Netscape or Internet Explorer) capable of displaying websites in the form of HTML or XML, an internal, external, or short-distance/long-distance wired/wireless network access protocol device, or the like.

As illustrated in FIG. 1, the server computer 60 may include a program controller PG for controlling programs, and a database DB for storing various types of information.

Particularly, as illustrated in FIG. 1, the program controller PG may include a main program 61 for managing all the other programs, a registration program 62 for receiving sign-up information from the user device 10 and the product provider device 30 and registering the user device 10 and the product provider device 30 as members, a log-in program 63 for receiving log-in information from the user device 10 and the product provider device 30, a product information providing program 64 for receiving event product information about an event product from the product provider device 30 and posting the event product information on the user device 10 during an event period, an event generation program 66 for receiving event request information for applying for the product in return for deduction of user-specific event points held by the user, from the user device 10 and storing event information generated to correspond to the event request information, an enhancement chance purchase program 67 for receiving event enhancement chance purchase information generated in return for deduction of the user-specific event points held by the user, from the user device 10 and storing enhancement chance information created to correspond to the event enhancement chance purchase information, an event enhancement program 68 for receiving enhancement chance use information used for the event information, from the user device 10 and storing enhancement success information for updating an event level if a result of randomly and automatically drawing a lot based on a success rate indicates success, or storing enhancement failure information for constantly maintaining or downgrading the event level or cancelling the event information if the result indicates failure, a product providing program 69 for transmitting event product providing information for providing the event product, to the user device 10 of a user who has reached a target level or a user who has initially reached a certain level during the event period, a discount coupon proving program 92 for transmitting discount coupon proving information to the user device 10 to provide a discount coupon usable for the event product or another product corresponding to a current level, a product payment program 70 for receiving payment request information for requesting to pay for the event product, from the product provider device 30, a sign-up guide program 71 for transmitting sign-up guide information for guiding to sign up a website of the product provider for delivery of the event product, to the user device 10 of a user who has reached a specific level, an event point saving program 72 for saving user-specific event points based on activity information of the user in a homepage or a website of the product provider, an affiliation program 73 for transmitting affiliation information to the product provider device 30, a point issuing program 94 for transmitting point information issued to correspond to the activities of the user, to the user device 10, a point forfeiture program 95 for transmitting point forfeiture information to the user device 10 and storing user-specific event point information corresponding to forfeited points, a game item trading program 96 for receiving game item selling information or game item purchase information from the user device 10, posting the game item selling information or the game item purchase information on a selling message board or a purchase message board, and mediating trading of a game item, and other programs 74.

Herein, the main program 61 manages all the other programs and may be implemented in the form of an on-line homepage or a main page. The main program 61 may be a program for controlling all the other programs by receiving a command signal from the user device 10, the product provider device 30, or the operator device 40.

The registration program 62 registers individuals or corporations as members using a website or a smartphone application, and may be a program for providing standard terms or terms for collecting and using personal information to get an agreement thereon, registering personal information such as a real name, an Internet personal identification number (i-PIN), an identifier (ID), a password, an e-mail address, a mobile phone number, and an address, or corporate information such as a company name and a business registration number, registering a credit card for payment, and requesting and getting a membership card.

The log-in program 63 may be a program for allowing the user to log in by inputting the ID or password after accessing the server computer 60 using the website or the smartphone application, or to reset the ID or password using the e-mail address or the like when the ID or password is forgot.

The point issuing program 94 may be a program for transmitting the point information issued to correspond to the activities of the user, to the user device 10 and may provide points per user based on the activities of the user. For example, the point issuing program 94 may provide 3 event points (EPs) when the user signs up the homepage, provide 1 EP when the user logs in, provide 1 EP whenever the user completes trading of a game item, provide 2 EPs when the user recommends the homepage to a friend.

The product information providing program 64 may be a program for receiving the event product information about the event product, e.g., a luxury bag, luxury shoes, a luxury watch, a vehicle, a yacht, a house, a travel voucher, a gift certificate, a ticket, or a cash prize, from the product provider device 30 and posting the event product information on the user device 10 during the event period. Herein, the event product is not limited to a product and may include all goods or services beneficial to users.

The point forfeiture program 95 may be a program for receiving the event request information from the user device 10 and qualifying the user to generate the event in return for deduction of the points.

The event generation program 66 may be a program for receiving the event request information for applying for the product in return for deduction of the user-specific event points held by the user, from the user device 10 and storing the event information generated to correspond to the event request information. For example, the user may pay 5 EPs to participate in a luxury bag event for winning a luxury bag after competing with competitors for a month. The event points to be paid may differ depending on the event product. For example, 4 EPs should be paid to participate in a smart pad event, and 3 EPs should be paid to participate in a monitor event.

The enhancement chance purchase program 67 may be a program for receiving the event enhancement chance purchase information generated in return for deduction of the user-specific event points held by the user, from the user device 10 and storing the enhancement chance information created to correspond to the event enhancement chance purchase information. For example, an enhancement chance may include a general enhancement chance achievable by deducting a relatively small number of event points (e.g., 1 EP), i.e., at a low enhancement chance price, but capable of cancelling an event or lowering an event level when enhancement is failed, and a special enhancement chance achievable by deducting a relatively large number of event points (e.g., 10 EPs), i.e., at a high enhancement chance price, but capable of maintaining the event or the event level even when enhancement is failed.

The enhancement chance may be purchased depending on the level of the user.

For example, users of levels 0 to 5 may purchase a 0 to 5 enchants enhancement chance having a success rate of 100%, users of levels 6 to 10 may purchase a 6 to 10 enchants enhancement chance having a success rate of 50%, users of levels 11 to 15 may purchase a 11 to 15 enchants enhancement chance having a success rate of 20%, and users of levels 16 to 20 may purchase a 16 to 20 enchants enhancement chance having a success rate of 5%.

The event enhancement program 68 may be a program for receiving the enhancement chance use information used for the event information, from the user device 10 and updating the event level, for example, from level 0 (0 enchant) to level 1 (1 enchant) if the result of randomly and automatically drawing a lot based on the success rate of, for example, 100%, 50%, 20%, or 5% indicates success, or constantly maintaining or downgrading the event level of level 0 (0 enchant) or even cancelling the event information if the result indicates failure.

The product providing program 69 may be a program for providing the product to a user who has initially reached a target level, e.g., level 20 (20 enchants) or a user who has initially reached a certain level during the event period, e.g., a month.

The discount coupon proving program 92 may be a program for transmitting the discount coupon proving information to the user device 10 to provide a level-specific discount coupon usable for the event product or another product corresponding to a current level of the user upon selection of the user even when the user has not reached the target level.

Accordingly, the user may win the discount coupon corresponding to the current level, e.g., a 10% discount coupon corresponding to level 15, a 20% discount coupon corresponding to level 16, or a 30% discount coupon corresponding to level 17, without enhancing the event.

The product payment program 70 may be a program for receiving the payment request information for requesting to pay for the event product, from the product provider device 30.

The sign-up guide program 71 may be a program for transmitting the sign-up guide information for guiding to sign up the website of the product provider for delivery of the event product, to the user device 10 of a user who has reached a specific level, e.g., level 10 (10 enchants), to guide the user to sign up the website. As such, the product provider may achieve effects of promotion and advertisement and may increase the number of members.

The event point saving program 72 may be a program for saving the user-specific event points based on the activities of the user in the homepage or the website of the product provider, e.g., sign-up, log-in, reviews, advertisement viewing, recommendation to friends, product details viewing, product or item trading completion, advertisement clicking, event participation, and product providing.

The affiliation program 73 may be a program for transmitting the affiliation information to the product provider device 30 to allow the product provider to enter a virtual space of the homepage.

The other programs 74 may be a program for enabling various types of promotion or advertisement, or managing security or various types of information.

The game item trading program 96 may be a program for receiving the game item selling information or the game item purchase information from the user device 10, posting the game item selling information or the game item purchase information on the selling message board or the purchase message board, and performing a series of trading mediating operations using the game item selling information or the game item purchase information to take over a game item from a seller and then hand over the game item to a buyer in a game program.

The game item trading program 96 may operate a selling reservation board for enabling the seller to previously hand over the game item to the operator before a selling price is paid, or a purchase reservation board for enabling the buyer to previously pay a purchase price before the buyer takes over the game item.

In addition, the game item trading program 96 may provide an arrival notification service for notifying the seller, the buyer, or the operator that the game item has arrived in the game program.

Accordingly, immersive and concentrative fun and interest may be brought to users, opportunities of promotion and advertisement may be given to product providers by naturally providing information about event products or the product providers to the users, and profits may be provided to an operator by receiving various commissions, affiliation charges, advertisement charges, product costs, etc. from the product providers in return for event, promotion, and advertisement services, thereby providing a business model greatly beneficial to all of the users, the product providers, and the operator.

As illustrated in FIG. 1, the database DB may include a sign-up information database 81 for storing the sign-up information, a log-in information database 82 for storing the log-in information, a point information database 97 for storing the point information, an event product information database 83 for storing the event product information, an event information database 84 for storing the event information, an enhancement success information database 85 for storing the enhancement success information, an enhancement failure information database 86 for storing the enhancement failure information, an event product providing information database 87 for storing the event product providing information, a discount coupon proving information database 93 for storing the discount coupon proving information, a payment request information database 88 for storing the payment request information, an activity information database 89 for storing the activity information, an affiliation information database 90 for storing the affiliation information, a game item selling information database 98 for storing the game item selling information, a game item purchase information database 99 for storing the game item purchase information, and other information databases 91.

Herein, for example, the event product information may include at least one selected among a product name of the event product, a model name of the event product, a price of the event product, the number of the event products, an event name, an event period, an event company, product promotion and advertisement information, review information after purchase and use, online lowest price information, and combinations thereof.

For example, the user-specific event point information may include at least one selected among forfeited point information, applied exchange rate information, exchange rate information per website, generated event point information, saved event point information, sign-up event point information, log-in event point information, recommend-to-friends event point information, trading completion event point information, and combinations thereof.

For example, the event information may include at least one selected among event participant information, event period information, event product information, current event competitor information, current competitive rate information, current event competitor's level information, current event competitor's enhancement chance information, current event competitor's enhancement chance use information, current projected winner information, previous event history information, and combinations thereof.

For example, the enhancement chance information may include at least one selected among current enhancement chance information, general enhancement chance information achievable by deducting a relatively small number of event points but capable of cancelling an event or lowering an event level when enhancement is failed, special enhancement chance information achievable by deducting a relatively large number of event points but capable of maintaining the event or the event level even when enhancement is failed, 0 to 5 enchants enhancement chance information usable by users of levels 0 to 5 and having a success rate of 100%, 6 to 10 enchants enhancement chance information usable by users of levels 6 to 10 and having a success rate of 50%, 11 to 15 enchants enhancement chance information usable by users of levels 11 to 15 and having a success rate of 20%, 16 to 20 enchants enhancement chance information usable by users of levels 16 to 20 and having a success rate of 5%, and combinations thereof.

For example, the enhancement success information may include at least one selected among level information to be upgraded, congratulatory information, current rank information, current competitor information, event product information, and combinations thereof, and the enhancement failure information may include at least one selected among level information to be downgraded, event cancellation information, consolatory information, current rank information, current competitor information, event product information, and combinations thereof.

For example, the event product providing information may include at least one selected among target level achievement information, event product acquisition information, acquired event product information, product delivery address information, product delivery date information, product delivery method information, sign-up guide information of a product provider, promotion and advertisement information of the product provider, review information, and combinations thereof.

For example, the discount coupon proving information may include at least one selected among discount coupon usable level information, discount rate information, discount coupon usable product information, discount coupon due date information, discount coupon issuer information, sign-up guide information of a discount coupon provider, promotion and advertisement information of the discount coupon provider, review information, and combinations thereof.

Herein, the discount rate of the discount coupon may be set to be low if the current level of the user is low, and set to be high if the current level of the user is high. The discount rate may be applied in various forms.

For example, the activity information may include at least one selected among sign-up information, log-in information, review information, advertisement viewing information, recommend-to-friends information, product details viewing information, product or item trading completion information, advertisement clicking information, event participation information, product providing information, and combinations thereof.

The game item selling information or the game item purchase information may include various types information such as game item seller or buyer information, selling or purchase price information, and selling or purchase date, time, and location information.

Accordingly, while the above-described information is communicated with the server computer 60 through the network 50, users may enhance minor points thereof to high levels during a set period of time to have chances of tactically or luckily winning event products, and thus immersive and concentrative fun and interest may be brought to the users.

For example, a certain user may initially use only 0 to 5 enchants enhancement chances having a success rate of 100%, monitor competitors who compete with the user for an event product, and then use 6 to 10 enchants enhancement chances having a success rate of 50%, 11 to 15 enchants enhancement chances having a success rate of 20%, or 16 to 20 enchants enhancement chance having a success rate of 5% at the same time immediately before the event period is expired.

Another user may diligently and safely upgrade the level thereof using special enhancement chances achievable by deducting a relatively large number of event points but capable of maintaining the event or the event level even when enhancement is failed.

Another user may experience fun and interest by upgrading the level thereof in various ways based on various factors, e.g., event points held by the user, discount coupons, an enhancement level, a competitive rate, and competitors.

The product providers may achieve effects of promotion and advertisement by naturally providing information about the event products, the discount coupons, or the product providers, to the users.

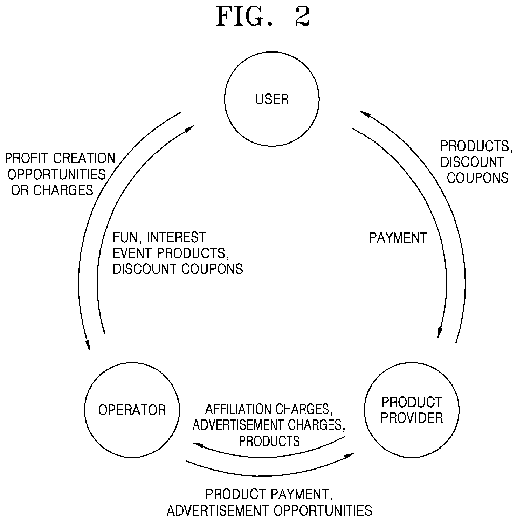

FIG. 2 is a conceptual view showing the relationship among the operator for providing point enhancement services, the users, and the product providers, according to some embodiments of the present invention.

Therefore, as illustrated in FIG. 2, the operator of the server computer 60 may receive various commissions, discount coupons, affiliation charges, advertisement charges, product costs, etc. from the product providers in return for event, promotion, and advertisement services, and thus a business model beneficial to all may be provided.

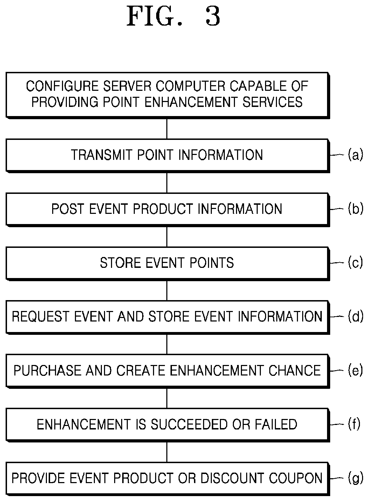

FIG. 3 is a flowchart of a point enhancement service providing method according to some embodiments of the present invention.

As illustrated in FIG. 3, the point enhancement service providing method according to some embodiments of the present invention sequentially includes configuring the server computer 60 of FIG. 1 capable of providing point enhancement services, (a) transmitting point information issued to correspond to activities of a user, to the user device 10, using the point issuing program 94, (b) receiving event product information about an event product from the product provider device 30 and posting the event product information on the user device 10 during an event period, using the product information providing program 64, (c) receiving request information from the user device 10 and storing user-specific event point information corresponding to forfeited points, using the point forfeiture program 95, (d) receiving event request information for applying for the product in return for deduction of user-specific event points held by the user, from the user device 10 and storing event information generated to correspond to the event request information, using the event generation program 66, (e) receiving event enhancement chance purchase information generated in return for deduction of the user-specific event points held by the user, from the user device 10 and storing enhancement chance information created to correspond to the event enhancement chance purchase information, using the enhancement chance purchase program 67, (f) receiving enhancement chance use information used for the event information, from the user device 10 and storing enhancement success information for updating an event level if a result of randomly and automatically drawing a lot based on a success rate indicates success, or storing enhancement failure information for constantly maintaining or downgrading the event level or cancelling the event information if the result indicates failure, using the event enhancement program 68, and (g) transmitting event product providing information for providing the event product or discount coupon information corresponding to a current level, to the user device 10 of a user who has reached a target level or a user who has initially reached a certain level during the event period, using the product providing program 69.

Herein, the above-described operations merely represent an example of the technical features of the present invention, are not limited to the above order, and other operations may be defined or added therebetween.

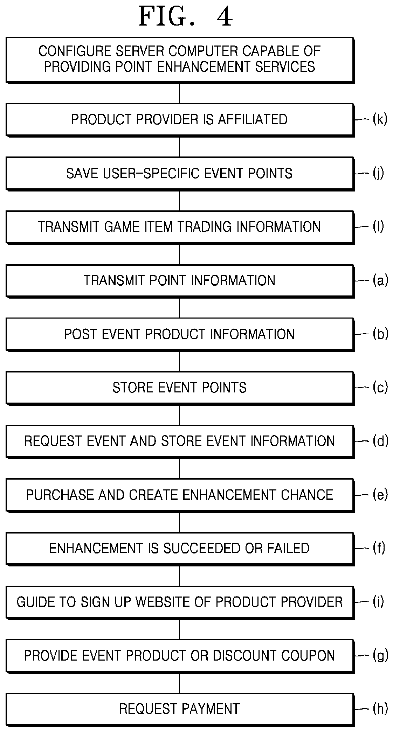

FIG. 4 is a flowchart of a point enhancement service providing method according to other embodiments of the present invention.

As illustrated in FIG. 4, the point enhancement service providing method according to other embodiments of the present invention may sequentially include configuring the server computer 60 of FIG. 1 capable of providing point enhancement services, (k) transmitting affiliation information to the product provider device 30, using the affiliation program 73, (j) saving user-specific event points based on activity information of the user in a homepage or a website of a product provider, using the event point saving program 72, (I) receiving game item selling information or game item purchase information from the user device 10, posting the game item selling information or the game item purchase information on a selling message board or a purchase message board, and transmitting trading information about trading of a game item to the user device 10, using the game item trading program 96, (a) transmitting point information issued to correspond to activities of the user, to the user device 10, using the point issuing program 94, (b) receiving event product information about an event product from the product provider device 30 and posting the event product information on the user device 10 during an event period, using the product information providing program 64, (c) receiving request information from the user device 10, transmitting point forfeiture information to the user device 10, and storing user-specific event point information corresponding to forfeited points, using the point forfeiture program 95, (d) receiving event request information for applying for the product in return for deduction of user-specific event points held by the user, from the user device 10 and storing event information generated to correspond to the event request information, using the event generation program 66, (e) receiving event enhancement chance purchase information generated in return for deduction of the user-specific event points held by the user, from the user device 10 and storing enhancement chance information created to correspond to the event enhancement chance purchase information, using the enhancement chance purchase program 67, (f) receiving enhancement chance use information used for the event information, from the user device 10 and storing enhancement success information for updating an event level if a result of randomly and automatically drawing a lot based on a success rate indicates success, or storing enhancement failure information for constantly maintaining or downgrading the event level or cancelling the event information if the result indicates failure, using the event enhancement program 68, (i) transmitting sign-up guide information for guiding to sign up the website of the product provider for delivery of the event product, to the user device 10 of a user who has reached a specific level (e.g., level 10), using the sign-up guide program 71, (g) transmitting event product providing information for providing the event product or discount coupon information corresponding to a current level, to the user device 10 of a user who has reached a target level (e.g., level 20) or a user who has initially reached a certain level during the event period, using the product providing program 69, and (h) receiving payment request information for requesting to pay for the event product, from the product provider device 30, using the product payment program 70.

Herein, the above-described operations merely represent an example of the technical features of the present invention, are not limited to the above order, and other operations may be defined or added therebetween.

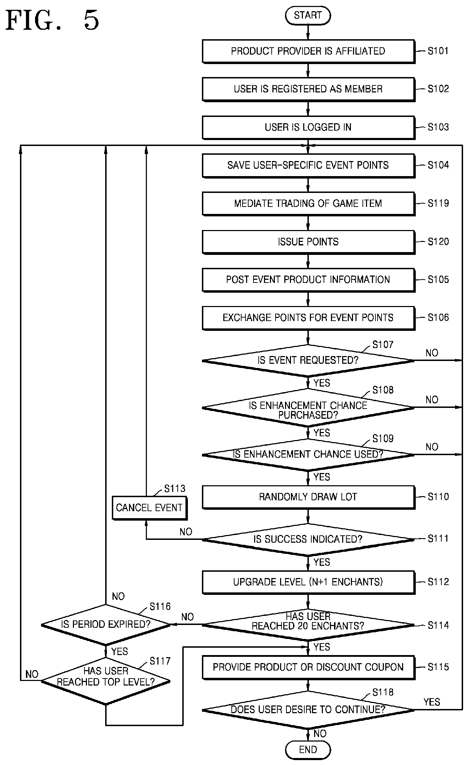

FIG. 5 is a detailed flowchart of the point enhancement service providing method of FIG. 4.

Operations (k), (j), (l), (a), (b), (c), (d), (e), (f), (i), (g), and (h) may be expressed as more detailed operations. As illustrated in FIG. 5, the product provider may express an intention of affiliation and enter a virtual space of the server computer 60, using the affiliation program 73 (S101).

Herein, affiliation may mean that the product provider is registered in the server computer 60 in a virtual online space capable of providing point enhancement services and thus information about the product provider is displayed on a screen of the user device 10 in the form of a button, a banner, an address link, a 2D or 3D graphic image, or the like.

Then, the user may input personal information or membership information to be registered as a member, using the registration program 62 or the log-in program 63 (S102).

Subsequently, the registered user may log in (S103), and user-specific event points may be saved based on activity information of the user in a homepage for providing the point enhancement services or a website of the product provider, using the event point saving program 72 (S104).

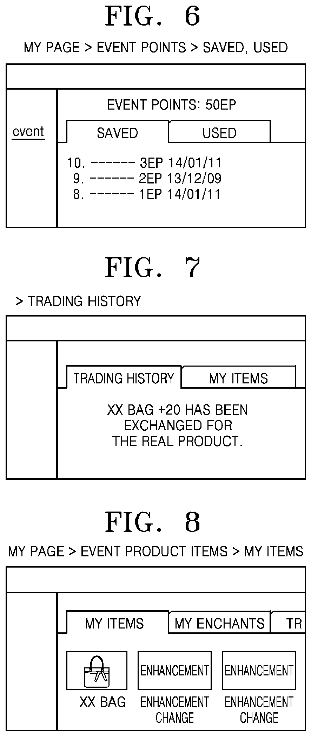

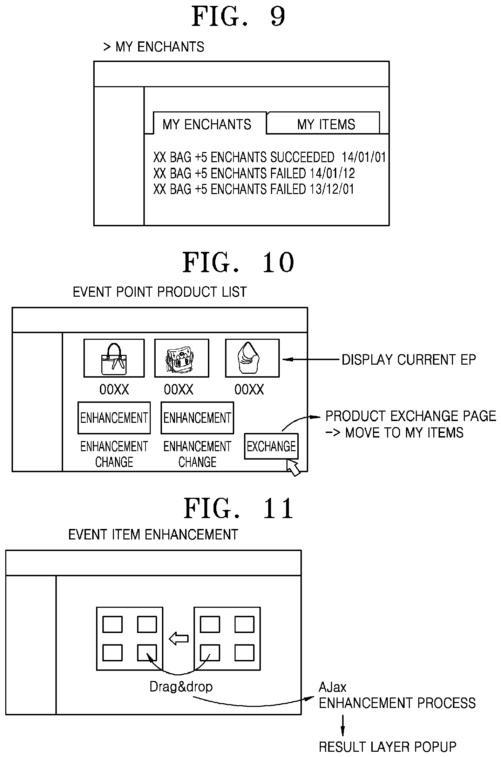

In this case, for example, the user may check the saved event points as illustrated in FIG. 6, check items held by the user (e.g., event product applications and enhancement chances) as illustrated in FIG. 8, check a trading history of the user as illustrated in FIG. 7, and check an enhancement level (enchants) of an event product for which the user is currently applied as illustrated in FIG. 9, on a "My Page" window of the screen of the user device 10.

Thereafter, game item selling information or game item purchase information may be received from the user device 10 and posted on a selling message board or a purchase message board, and trading information about trading of a game item may be transmitted to the user device 10 (S119). As such, point information issued to correspond to activities of the user may be transmitted to the user device 10 (S120).

Then, if the product providers provide event product information about event products during an event period using the product information providing program 64, the event product information may be posted to be viewed to the users (S105).

In this case, as illustrated in FIG. 10, an event product list, event points held by the user, exchange information, etc. may be displayed on an "Event Point Products" window of the screen of the user device 10.

Subsequently, a user who desires to win an event product may exchange the event points held by the user or the points issued based on the activities in the homepage, for event points based on a certain exchange rate, using the point forfeiture program 95 (S106). Herein, the exchange rate may be automatically determined using an exchange rate program based on values, contracts, etc. of the market, or arbitrarily determined by the operator.

Thereafter, if a user who has sufficient event points requests for an event (S107), an event for the event product may be generated in return for deduction of the user-specific event points held by the user, using the event generation program 66.

Then, if a user who desires to purchase enhancement chances requests to purchase enhancement chances (S108), the enhancement chances may be purchased in return for deduction of the user-specific event points held by the user, using the enhancement chance purchase program 67.

Subsequently, if a user who desires to use the enhancement chances requests to use the enhancement chances (S109), success or failure of each enhancement chance may be randomly and automatically determined based on a preset success rate, using the event enhancement program 68 (S110).

In this case, as illustrated in FIG. 11, the event product applications may be enhanced in a drag-and-drop manner using an enhancement program.

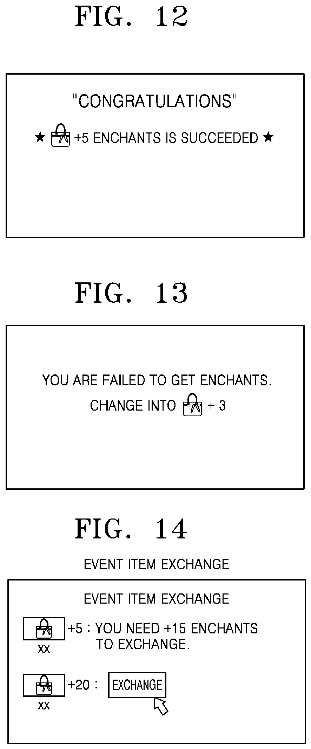

Thereafter, if a result of drawing a lot indicates success (S111), as illustrated in FIG. 12, an event level may be upgraded by one level from a current level (S112). However, if the result indicates failure, as illustrated in FIG. 13, the event level may be downgraded or the event may be cancelled (S113).

In this case, among users who have levels upgraded using enhancement chances, a user who has reached a specific level (e.g., level 10) may be guided to sign up the website of the product provider.

Then, among the users who have levels upgraded using enhancement chances, if any user has reached a target level (e.g., level 20 (20 enchants)) during the event period (S114), the event product may be provided to the user (S115).

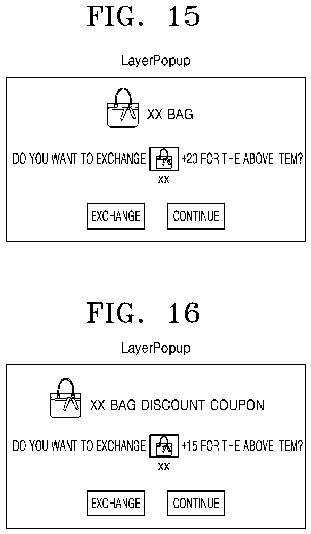

In this case, an event item may be exchanged for a real product as illustrated in FIG. 14, or a real product may be delivered to the user if the user clicks an exchange button on a popup window as illustrated in FIG. 15.

In addition, as illustrated in FIG. 16, even when the user has not won the event product, the user may win a discount coupon corresponding to a current level upon selection of the user. In this case, if the current level of the user is high, a discount rate may also be high and thus more benefits may be provided to the user.

Furthermore, even when the users have not reached the target level, if the event period is expired (S116), the event product may be provided (S115) to a user who has initially reached a certain level (S117).

Then, the above-described operations may be repeated by guiding the user whether to continue (S118).

Therefore, the operator for providing the point enhancement services as described above may bring immersive and concentrative fun and interest to the users and give opportunities of promotion and advertisement to the product providers by naturally providing information about event products or the product providers to the users.

As such, a point enhancement service providing method and system and a computer-readable recording medium having recorded the method thereon, according to some embodiments of the present invention, may provide a variety of services such as point issuing, point forfeiture, product information providing, event product application, enhancement chance purchase, application enhancement, product providing, product payment, sign-up guide, event point saving, and affiliation.

The present invention can also be embodied as computer-readable code on a computer-readable medium.

The computer-readable medium is any data storage device that can store data which can be thereafter read by a computer system.

Examples of the computer-readable medium include read-only memory (ROM), random-access memory (RAM), CD-ROMs, magnetic tapes, floppy disks, magneto-optical disks, optical data storage devices, flash memory, and carrier waves (e.g., transmission through the Internet).

The computer-readable medium can also be distributed over network coupled computer systems so that the computer-readable code is stored and executed in a distributed fashion.

While the present invention has been particularly shown and described with reference to embodiments thereof, it will be understood by one of ordinary skill in the art that various changes in form and details may be made therein without departing from the spirit and scope of the present invention as defined by the following claims.

### INDUSTRIAL APPLICABILITY

As described above, according to some embodiments of the present invention, immersive and concentrative fun and interest may be brought to users, opportunities of promotion and advertisement may be given to product providers by naturally providing information about event products or the product providers to the users, and profits may be provided to an operator by receiving various commissions, affiliation charges, advertisement charges, product costs, etc. from the product providers.

## Claims

1. A method of providing point enhancement services using a computer system comprising a server computer connected to at least one user device and an operator device through a network by:
transmitting point information issued to correspond to activities of a user, to the user device;
receiving event request information for applying for a product in return for deduction of points held by the user, from the user device and storing event information generated to correspond to the event request information;
receiving event enhancement chance purchase information generated in return for deduction of the points held by the user, from the user device and storing enhancement chance information created to correspond to the event enhancement chance purchase information;
receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure; and
transmitting event product providing information for providing an event product or discount coupon proving information for providing a discount coupon, to the user device of a user who has reached a target level or a user who has initially reached a certain level during an event period.

2. A method of providing point enhancement services using a computer system comprising a server computer connected to at least one user device, at least one product provider device, and an operator device through a network, the server computer comprising:
a point issuing program for transmitting point information issued to correspond to activities of a user, to the user device;
a product information providing program for receiving event product information about an event product from the product provider device and posting the event product information on the user device during an event period;
a point forfeiture program for transmitting point forfeiture information to the user device and storing user-specific event point information corresponding to forfeited points;
an event generation program for receiving event request information for applying for the product in return for deduction of user-specific event points held by the user, from the user device and storing event information generated to correspond to the event request information;
an enhancement chance purchase program for receiving event enhancement chance purchase information generated in return for deduction of the user-specific event points held by the user, from the user device and storing enhancement chance information created to correspond to the event enhancement chance purchase information;
an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure;
a product providing program for transmitting event product providing information for providing the event product, to the user device of a user who has reached a target level or a user who has initially reached a certain level during the event period;
a point information database for storing the point information;
an event product information database for storing the event product information;
an event information database for storing the event information;
an enhancement success information database for storing the enhancement success information;
an enhancement failure information database for storing the enhancement failure information; and
an event product providing information database for storing the event product providing information, and the method comprising:
(a) transmitting the point information issued to correspond to the activities of the user, to the user device, using the point issuing program;
(b) receiving the event product information about the event product from the product provider device and posting the event product information on the user device during the event period, using the product information providing program;
(c) transmitting the point forfeiture information to the user device and storing the user-specific event point information corresponding to the forfeited points, using the point forfeiture program;
(d) receiving the event request information for applying for the product in return for deduction of the user-specific event points held by the user, from the user device and storing the event information generated to correspond to the event request information, using the event generation program;
(e) receiving the event enhancement chance purchase information generated in return for deduction of the user-specific event points held by the user, from the user device and storing the enhancement chance information created to correspond to the event enhancement chance purchase information, using the enhancement chance purchase program;
(f) receiving the enhancement chance use information used for the event information, from the user device and storing the enhancement success information for updating the event level if the result of randomly and automatically drawing a lot based on the success rate indicates success, or storing the enhancement failure information for constantly maintaining or downgrading the event level or cancelling the event information if the result indicates failure, using the event enhancement program; and
(g) transmitting the event product providing information for providing the event product, to the user device of the user who has reached the target level or the user who has initially reached the certain level during the event period, using the product providing program.

3. The method of claim 2, wherein the server computer further comprises:
a game item trading program for receiving game item selling information or game item purchase information from the user device, posting the game item selling information or the game item purchase information on a selling message board or a purchase message board, and mediating trading of a game item;
a game item selling information database for storing the game item selling information; and
a game item purchase information database for storing the game item purchase information, and
wherein the method further comprises (l) receiving the game item selling information or the game item purchase information from the user device, posting the game item selling information or the game item purchase information on the selling message board or the purchase message board, and transmitting trading information about trading of the game item to the user device, using the game item trading program, before (a).

4. The method of claim 2, wherein the server computer further comprises:
a product payment program for receiving payment request information for requesting to pay for the event product, from the product provider device and processing the payment request information; and
a payment request information database for storing the payment request information, and
wherein the method further comprises (h) receiving the payment request information for requesting to pay for the event product, from the product provider device and processing the payment request information, using the product payment program.

5. The method of claim 2, wherein the event product information comprises at least one selected among a product name of the event product, a model name of the event product, a price of the event product, the number of the event products, an event name, the event period, an event company, product promotion and advertisement information, review information after purchase and use, online lowest price information, and combinations thereof.

6. The method of claim 2, wherein the user-specific event point information comprises at least one selected among forfeited point information, applied exchange rate information, generated event point information, saved event point information, sign-up event point information, log-in event point information, recommend-to-friends event point information, game item trading completion event point information, review information, attendance information, advertisement or promotional video viewing information, and combinations thereof.

7. The method of claim 2, the event information comprises at least one selected among event participant information, event period information, event product information, current event competitor information, current competitive rate information, current event competitor's level information, current event competitor's enhancement chance information, current event competitor's enhancement chance use information, current projected winner information, previous event history information, and combinations thereof.

8. The method of claim 2, wherein the enhancement chance information comprises at least one selected among current enhancement chance information, general enhancement chance information achievable by deducting a relatively small number of event points but capable of cancelling an event or lowering an event level when enhancement is failed, special enhancement chance information achievable by deducting a relatively large number of event points but capable of maintaining the event or the event level even when enhancement is failed, success rate information increased in inverse proportion to a level, and combinations thereof.

9. The method of claim 2, wherein the enhancement success information comprises at least one selected among level information to be upgraded, congratulatory information, current rank information, current competitor information, event product information, and combinations thereof, and
wherein the enhancement failure information comprises at least one selected among level information to be downgraded, event cancellation information, consolatory information, current rank information, current competitor information, event product information, and combinations thereof.

10. The method of claim 2, wherein the event product providing information comprises at least one selected among target level achievement information, event product acquisition information, acquired event product information, product delivery address information, product delivery date information, product delivery method information, sign-up guide information of a product provider, promotion and advertisement information of the product provider, review information, and combinations thereof.

11. The method of claim 2, wherein the server computer further comprises a sign-up guide program for transmitting sign-up guide information for guiding to sign up a website of a product provider for delivery of the event product, to the user device of a user who has reached a specific level, and
wherein the method further comprises (i) transmitting the sign-up guide information for guiding to sign up the website of the product provider for delivery of the event product, to the user device of the user who has reached the specific level, using the sign-up guide program, after (f).

12. The method of claim 2, wherein the server computer further comprises:
an event point saving program for saving user-specific event points based on activity information of the user in a homepage or a website of a product provider; and
an activity information database for storing the activity information, and
wherein the method further comprises (j) saving the user-specific event points based on the activity information of the user in the homepage or the website of the product provider, using the event point saving program, before (b).

13. The method of claim 11, wherein the activity information comprises at least one selected among sign-up information, log-in information, review information, advertisement viewing information, recommend-to-friends information, product details viewing information, product or item trading completion information, advertisement clicking information, event participation information, product providing information, and combinations thereof

14. The method of claim 2, wherein the server computer further comprises:
an affiliation program for transmitting affiliation information to the product provider device; and
an affiliation information database for storing the affiliation information, and
wherein the method further comprises (k) transmitting the affiliation information to the product provider device, using the affiliation program, before (b).

15. The method of claim 2, wherein the server computer further comprises:
a discount coupon proving program for transmitting discount coupon proving information to the user device to provide a discount coupon usable for the event product or another product corresponding to a current level; and
a discount coupon proving information database for storing the discount coupon proving information, and
wherein (g) comprises transmitting the discount coupon proving information to the user device to provide a level-specific discount coupon usable for the event product or the other product corresponding to the current level of the user upon selection of the user even when the user has not reached the target level.

16. A computer system comprising a server computer connected to at least one user device, at least one product provider device, and an operator device through a network to provide point enhancement services, the server computer comprising:
a point issuing program for transmitting point information issued to correspond to activities of a user, to the user device;
a product information providing program for receiving event product information about an event product from the product provider device and posting the event product information on the user device during an event period;
a point forfeiture program for transmitting point forfeiture information to the user device and storing user-specific event point information corresponding to forfeited points;
an event generation program for receiving event request information for applying for the product in return for deduction of user-specific event points held by the user, from the user device and storing event information generated to correspond to the event request information;
an enhancement chance purchase program for receiving event enhancement chance purchase information generated in return for deduction of the user-specific event points held by the user, from the user device and storing enhancement chance information created to correspond to the event enhancement chance purchase information;
an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure;
a product providing program for transmitting event product providing information for providing the event product, to the user device of a user who has reached a target level or a user who has initially reached a certain level during the event period;
a point information database for storing the point information;
an event product information database for storing the event product information;
an event information database for storing the event information;
an enhancement success information database for storing the enhancement success information;
an enhancement failure information database for storing the enhancement failure information;
an event product providing information database for storing the event product providing information; and
a controller programmed:
to transmit the point information issued to correspond to the activities of the user, to the user device, using the point issuing program;
to receive the event product information about the event product from the product provider device and post the event product information on the user device during the event period, using the product information providing program;
to transmit the point forfeiture information to the user device and store the user-specific event point information corresponding to the forfeited points, using the point forfeiture program;
to receive the event request information for applying for the product in return for deduction of the user-specific event points held by the user, from the user device and store the event information generated to correspond to the event request information, using the event generation program;
to receive the event enhancement chance purchase information generated in return for deduction of the user-specific event points held by the user, from the user device and store the enhancement chance information created to correspond to the event enhancement chance purchase information, using the enhancement chance purchase program;
to receive the enhancement chance use information used for the event information, from the user device and store the enhancement success information for updating the event level if the result of randomly and automatically drawing a lot based on the success rate indicates success, or store the enhancement failure information for constantly maintaining or downgrading the event level or cancelling the event information if the result indicates failure, using the event enhancement program; and
to transmit the event product providing information for providing the event product, to the user device of the user who has reached the target level or the user who has initially reached the certain level during the event period, using the product providing program.

17. A computer-readable recording medium having recorded thereon a method of providing point enhancement services using a computer system comprising a server computer connected to at least one user device, at least one product provider device, and an operator device through a network, the server computer comprising:
a point issuing program for transmitting point information issued to correspond to activities of a user, to the user device;
a product information providing program for receiving event product information about an event product from the product provider device and posting the event product information on the user device during an event period;
a point forfeiture program for transmitting point forfeiture information to the user device and storing user-specific event point information corresponding to forfeited points;
an event generation program for receiving event request information for applying for the product in return for deduction of user-specific event points held by the user, from the user device and storing event information generated to correspond to the event request information;
an enhancement chance purchase program for receiving event enhancement chance purchase information generated in return for deduction of the user-specific event points held by the user, from the user device and storing enhancement chance information created to correspond to the event enhancement chance purchase information;
an event enhancement program for receiving enhancement chance use information used for the event information, from the user device and storing enhancement success information for updating an event level if a result of randomly and automatically drawing a lot based on a success rate indicates success, or storing enhancement failure information for constantly maintaining or downgrading the event level or cancelling the event information if the result indicates failure;
a product providing program for transmitting event product providing information for providing the event product, to the user device of a user who has reached a target level or a user who has initially reached a certain level during the event period;
a point information database for storing the point information;
an event product information database for storing the event product information;
an event information database for storing the event information;
an enhancement success information database for storing the enhancement success information;
an enhancement failure information database for storing the enhancement failure information; and
an event product providing information database for storing the event product providing information, and the method comprising:
(a) transmitting the point information issued to correspond to the activities of the user, to the user device, using the point issuing program;
(b) receiving the event product information about the event product from the product provider device and posting the event product information on the user device during the event period, using the product information providing program;
(c) transmitting the point forfeiture information to the user device and storing the user-specific event point information corresponding to the forfeited points, using the point forfeiture program;
(d) receiving the event request information for applying for the product in return for deduction of the user-specific event points held by the user, from the user device and storing the event information generated to correspond to the event request information, using the event generation program;
(e) receiving the event enhancement chance purchase information generated in return for deduction of the user-specific event points held by the user, from the user device and storing the enhancement chance information created to correspond to the event enhancement chance purchase information, using the enhancement chance purchase program;
(f) receiving the enhancement chance use information used for the event information, from the user device and storing the enhancement success information for updating the event level if the result of randomly and automatically drawing a lot based on the success rate indicates success, or storing the enhancement failure information for constantly maintaining or downgrading the event level or cancelling the event information if the result indicates failure, using the event enhancement program; and
(g) transmitting the event product providing information for providing the event product, to the user device of the user who has reached the target level or the user who has initially reached the certain level during the event period, using the product providing program.
